# EUROPEAN PATENT APPLICATION

(11) **EP 4 625 355 A1**
(43) Date of publication of application: **01.10.2025**
(21) Application number: 24305441.8
(22) Date of filing: 25.03.2024
(51) Int. Cl.: G06V 10/82, G06V 30/32

(54) **SYMBOL RECOGNITION OF HANDWRITING INPUT SEQUENCES**

(71) Applicant: MyScript, 44339 Nantes Cedex 3 (FR)
(72) Inventor: Onis, Sébastien, 44339 Nantes (FR); Manson, Gäel, 44339 Nantes (FR)
(74) Representative: RVDB Nantes

(57) **Abstract**

A system and method for recognizing handwriting input of a sequence of ink points into a sequence of symbols, said method comprising: retrieving the handwriting input including the sequence of ink points; featurizing the sequence of ink points into a sequence of feature vectors; generating first encoding output vectors and second encoding output vectors by applying the sequence of feature vectors to an encoder; wherein the first encoding output vectors comprise a sequence of memory vectors and the second encoding output vectors comprise a sequence of memory segments; generating decoding output vectors by applying first decoding inputs, second decoding inputs and third decoding inputs to a decoder, wherein the second decoding inputs are the first encoding output vectors; generating segmenting context vectors by combining the second encoding output vectors and the first decoding output vectors; recognizing, iteratively, the symbols of the sequence of symbols by extracting a predicted symbol from the first decoding output vectors; wherein the third decoding inputs of the decoder are the segmenting context vectors; wherein the first decoding inputs of the decoder are the recognized symbols of the sequence of recognized symbols of the previous iterations; and wherein the recognized symbol of the first iteration is a beginning-of-sequence symbol.

## Description

### Field of the invention

The present invention relates to the field of methods and computing devices for processing handwriting and is concerned in particular with recognizing handwritten symbols in touch-based user interfaces.

### Background

Handwriting recognition can be implemented in computing devices to input and process various types of handwritten input elements, hand-drawn or handwritten by a user, such as text content (e.g., alphanumeric characters) or non-text content (e.g., shapes, drawings). Once inputted on a computing device, the input elements are usually displayed as digital ink and undergo handwriting recognition to be manipulated as objects, for example text objects such as characters, words, lines or paragraphs or non-text objects such as primitives or shapes. The user handwriting input is typically interpreted using a real-time handwriting recognition system or method.

To provide users with a good experience, including display of handwriting, manipulations, editing and the like, it is critical that handwriting input from a user be recognized as accurately as possible. A recent category of handwriting recognition system operates by directly recognizing a sequence of characters or words from the full sequence of ink points corresponding to the user input, referred to as "sequence to sequence system". An example of this category of methods is a handwriting recognition approach based on a neural network-based sequence classifier. The neural network-based sequence classifier may be a Recurrent Neural Network (RNN), a Convolutional Neural Network (CNN), or a Transformer encoder, for example. The RNN may have a standard RNN architecture or a particular RNN architecture, such as a Long Short-Term Memory (LSTM) or a Gated Recurrent Unit (GRU) RNN architecture.

However, handwriting input may be of various natures, which sometimes renders the task of handwriting recognition delicate. In particular, handwriting recognition can be challenging when handwriting includes math content. For example, the recognition of duplicate consecutive symbols is a very difficult task for a sequence-to-sequence system. The processing of identical consecutive symbols by sequence-to-sequence systems tends to create hallucination problems, with the system losing spatial track of the recognized sequence of symbols, implying that some parts of the input may be recognized twice or more, while some parts may never be recognized. For example, if an input sequence is a math sequence of consecutive symbols such as "3 3 3 3" that is four times the number '3'. The sequence-to-sequence system is processing the same character which tends to create hallucination problems, with the system losing track of what it is recognizing. This can result in certain symbols being recognized twice or more and other symbols not at all. For example, the output of the system may generate more or fewer "3s" than the actual input. In the particular example, the output may be "3 3 3 3 3", that is five times the number `3' or, "3 3 3", that is three times the number '3'.

As of today, there is a lack of efficient solutions, in particular, a solution to improve recognition of math content in handwriting in an accurate and reliable manner is needed.

### Summary of the invention

The examples of the present invention that are described herein below provide computing devices, methods and corresponding computer programs for recognizing handwriting input of a sequence of ink points into a sequence of symbols.

According to a first aspect, the invention provides a computing device configured to recognize handwriting input of a sequence of ink points into a sequence of symbols comprising: an encoding module configured to receive the sequence of ink points at an encoding input (EI) and to iteratively generate first encoding output vectors at a first encoding output (EO1), and second encoding output vectors at a second encoding output (EO2); a decoding module, coupled, at a first decoding input (DI1) with the first encoding output of the encoding module, configured to generate a sequence of first decoding output vectors at a first decoding output (DO1) and, a second decoding output sequence at a second decoding output (DO2); a segmenting module, coupled, at a first segmenting input (SI1) with the first encoding output of the encoding module and, at a second segmenting input (SI2) with the second decoding output of the decoding module, configured to generate segmenting output vectors at a segmenting output (SO); wherein the decoding module is coupled at a second decoding input (DI2), with the segmenting output of the segmenting module, to receive the segmenting output vectors; wherein the first encoding output vectors comprise a sequence of memory vectors (MVt) and the second encoding output vectors comprise a sequence of memory segments (MSi), each memory segment corresponding to one ink point; and wherein the second decoding output sequence comprises the recognized sequence of symbols and the decoding module is receiving, at a third decoding input (DI3) of the decoding module, the recognized symbol of the sequence of recognized symbol of the previous iteration.

According to a particular embodiment, the computing device further comprises an ink point retrieving module coupled to the encoding input and configured to retrieve the sequence of ink points.

According to a particular embodiment, the encoding module of the computing device further comprises: an ink point featurizer comprising the encoding input and configured to generate, at an output of the featurizer, a sequence of feature vectors (Fi) from the sequence of ink points; an encoder, having an encoder input coupled to the output of the featurizer, configured to generate the first encoding output vectors and the second encoding output vectors from the sequence of feature vectors.

According to a particular embodiment, the encoder of the encoding module is a convolutional neural network, a transformer or a recurrent neural network.

According to a particular embodiment, the decoding module of the computing device further comprises: a vectorizer, comprising the third decoding input and configured to generate, at an output of the vectorizer, input embeddings (Ej-1) from the recognized symbol of the sequence of recognized symbols of the previous iteration, wherein the recognized symbol of the first iteration is a beginning-of-sequence symbol; a decoder, having a decoder input coupled to the output of the vectorizer, and configured to generate, at an output of the decoder, the first decoding output vectors (OVj) from the input embeddings (E j-1); a predicter, having a predicter input coupled to the output of the decoder, and configured to recognized, at the second decoding module output, a symbol of the sequence of recognized symbol from the first decoding output vectors (OVj) wherein the recognized symbol of the last iteration is an end-of-sequence symbol.

According to a particular embodiment, the decoder is a recurrent neural network or a transformer comprising multi-head attention layers.

According to a particular embodiment, the decoder has a first attention input coupled to the vectorizer output, a second attention input coupled to the first encoding output of the encoding module and a third attention input coupled to the segmenting output of the segmenting module, configured to generate the decoding output vectors.

According to a particular embodiment, the encoder and the decoder are coupled and trained to predict the sequence of symbols according to possible symbols of a pre-defined alphabet.

According to a particular embodiment, the segmenting module further comprises: a segmenter, having a first segmenter input coupled to the second encoding output of the encoding module, and a second segmenter input, coupled to the first decoding output of the decoding module, and configured to combine the first decoding output vectors with the second encoding output vectors to extract at a segmenter output a matrix of probabilities of each possible symbol at each ink point, wherein the matrix of probabilities determines symbol segments of the sequence of ink points; and a pooler, having a first pooler input coupled to the segmenter output of the segmenter and a second pooler input coupled to the second encoding output of the encoding module, configured to group the second encoding output vectors corresponding to the same symbol segment into pooler output vectors at the segmenter output wherein the grouping comprises a sum or a mean of the grouped second encoding output vectors.

According to a second aspect, the invention provides a method for recognizing handwriting input of a sequence of ink points into a sequence of symbols, said method comprising: retrieving the handwriting input including the sequence of ink points; featurizing the sequence of ink points into a sequence of feature vectors; generating first encoding output vectors and second encoding output vectors by applying the sequence of feature vectors to an encoder; wherein the first encoding output vectors comprise a sequence of memory vectors (MVn) and the second encoding output vectors comprise a sequence of memory segments (MSt); generating decoding output vectors by applying first decoding inputs, second decoding inputs and third decoding inputs to a decoder, wherein the second decoding inputs are the first encoding output vectors; generating segmenting context vectors by combining the second encoding output vectors and the first decoding output vectors; recognizing, iteratively, the symbols of the sequence of symbols by extracting a predicted symbol from the first decoding output vectors; wherein the third decoding inputs of the decoder are the segmenting context vectors; wherein the first decoding inputs of the decoder are the recognized symbols of the sequence of recognized symbols of the previous iterations; and wherein the recognized symbol of the first iteration is a beginning-of-sequence symbol.

According to a particular embodiment, a memory vector and a memory segment correspond to vectors of an encoding size of features of high-level annotations of the sequence of ink points; whereas a first length of the sequence of memory vectors is lower than the length of the sequence of ink points and a second length of the sequence of memory segments is equal to the length of the sequence of ink points.

According to a particular embodiment, the third decoding input is obtained by vectorizing the recognized symbol of the sequence of recognized symbols of the previous iteration into the input embeddings (Ej-1), wherein the recognized symbol of the first iteration is a beginning-of-sequence symbol.

According to a particular embodiment, the second decoding output sequence is a sequence of sets of probabilities of possible symbols.

According to a particular embodiment, the second decoding output sequence is applied to a symbol predicter to recognize a symbol of the sequence of symbols wherein the recognized symbol of the last iteration is an end-of-sequence symbol.

According to a particular embodiment, generating of the segmenting output vectors comprises: combining the decoding output vectors with the second encoding output vectors to extract at a segmenter output a matrix of probabilities of each possible symbol at each ink point, wherein the matrix of probabilities determines symbol segments of the sequence of ink points; and grouping the second encoding output vectors corresponding to the same symbol segment into the segmenting output vectors, wherein the grouping comprises a sum or a mean of the grouped second encoding output vectors.

The various embodiments defined above in connection with the device according to the first aspect of the present invention apply in an analogous manner to the method of the second aspect, as well as the computer program and the non-transitory computer readable medium of the present disclosure.

For each step of the method of the present invention as defined in the present disclosure, the computing device may comprise a corresponding module configured to perform said step, and vice versa.

### Brief description of the drawings

The present system and method will be more fully understood from the following detailed description of the examples thereof, taken together with the drawings. In the drawings like reference numerals depict like elements. In the drawings:
FIG. 1 shows a block diagram of a computing device in accordance with an embodiment of the present invention;
FIG. 2 shows a block diagram of a computing device in accordance with an embodiment of the present invention;
FIG. 3 shows a block diagram of a computing device in accordance with an embodiment of the present invention;
FIG. 4 shows a flow diagram of an example of the present method in accordance with an embodiment of the present invention;
FIG. 5A, 5B and 5C show an example illustrating an example of ink point sequence recognized according to the system and method of FIG. 1 to FIG.4.

### Detailed description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

The use of the term "text" in the present description is understood as encompassing all characters (e.g. alphanumeric characters or the like), and strings thereof, in any written language and any symbols used in written text.

The term "math" (or mathematics) is understood in the present disclosure as encompassing any math symbols, or string of math symbols, in any language, i.e. any symbols used for expressing math content, math expressions or anything of mathematic nature.

The terms "hand-drawing" and "handwriting" are used interchangeably herein to define the creating of digital contents by users through use of their hands (or fingers) or an input device (hand-held stylus or digital pen, mouse...) on or with an input surface 4. The term "hand" or the like is used herein to provide concise description of the input techniques, however the use of other parts of a user's body for similar input is included in this definition, such as foot, mouth and eye.

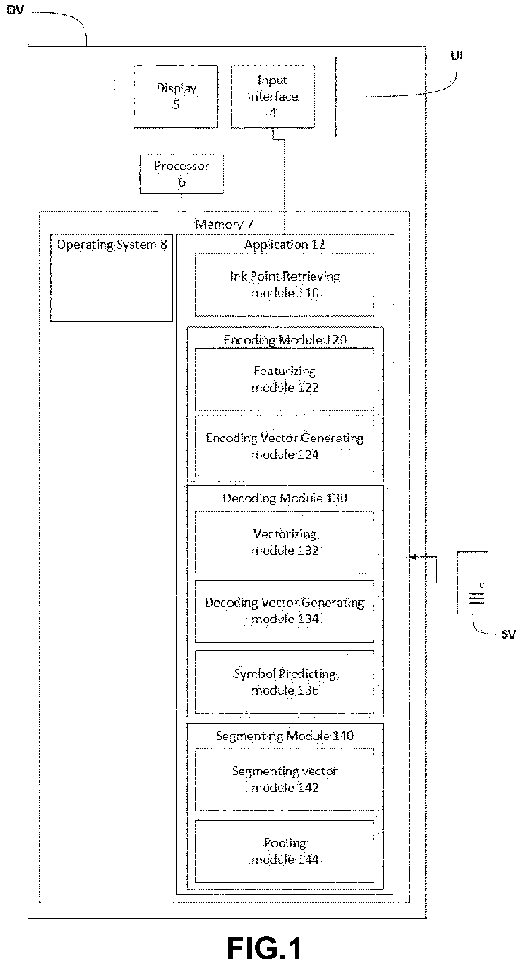

The various technologies described herein generally relate to capture, processing and management of hand-drawn or handwritten content on portable and non-portable computing devices, referenced hereinafter as DV, depicted in figure 1. The systems and methods described herein may utilize recognition of user's natural writing and drawing styles input to a computing device via an input surface 4, such as a touch sensitive screen (as discussed later).

The computing device (or digital device) DV may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or the like. The computing device DV includes components of at least one processing element, some form of memory and input and output (I/O) devices. The components communicate with each other through inputs and outputs, such as connectors, lines, buses, links networks, or others known to the skilled person.

The computing device DV has at least one display 5 for outputting data from the computing device such as images, text, and video. The display 5 may use LCD, plasma, LED, OLED, CRT, or any other appropriate technology that is or is not touch sensitive as known to those of ordinary skill in the art. At least part of the display is co-located with at least one input area. The input area may employ technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input. The input area may be bounded by a permanent or video-generated border that clearly identifies its boundaries. Instead of, or additional to, an on-board display, the computing device DV may have a projected display capability.

The computing device DV also includes a processor 6, which is a hardware device for executing software, particularly software stored in memory 7. The processor 6 can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 7 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 7 may incorporate electronic, magnetic, optical, and/or other types of storage media. The memory can have a distributed architecture where various components are situated remote from one another but can also be accessed by the processor. Further, the memory 7 may be remote from the device, such as at a server or cloud-based system, which is remotely accessible by the computing device DV. The memory 7 is coupled to the processor 6, so the processor can read information from and write information to the memory 7. In the alternative, the memory 7 may be integral to the processor 6. In another example, the processor 6 and the memory 7 may both reside in a single ASIC or other integrated circuit.

The software in the memory includes an operating system 8 and an application 12 in the form of a non-transitory computer readable medium having a computer readable program code embodied therein. The operating system 8 controls the execution of the application 12. The operating system 8 may be any proprietary operating system or a commercially or freely available operating system, such as WEBOS, WINDOWSO, MAC and IPHONE OS^{®}, LINUX, and ANDROID. It is understood that other operating systems may also be utilized. Alternatively, the application of the present system and method may be provided without use of an operating system.

The application 12 (or computer program) includes one or more processing elements related to detection, management and treatment of user input (discussed in detail later). The software may also include one or more other applications related to handwriting recognition (HWR), different functions, or both. Some examples of other applications include a text editor, telephone dialer, contacts directory, instant messaging facility, computer-aided design (CAD) program, email program, word processing program, web browser, and camera.

The application 12, with support and compliance capabilities, may be a source program, executable program (object code), script, application, or any other entity having a set of instructions to be performed. When a source program, the program needs to be translated via a compiler, assembler, interpreter, or the like, which may or may not be included within the memory, so as to operate properly in connection with the operating system. Furthermore, the HWR system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, and Ada; or (c) functional programing languages for example but no limited to Hope, Rex, Common Lisp, Scheme, Clojure, Racket, Erlang, OCaml, Haskell, Prolog, and F#.

Strokes entered on or via the input surface or touch based user interface 4 are processed by the processor as digital ink. A user may enter a stroke with a finger or some instrument such as a pen or stylus suitable for use with the input surface 4. The user may also enter a stroke by making a gesture above the input surface 4 if technology that senses motions in the vicinity of the input surface 4 is being used, or with a peripheral device of the computing device, such as a mouse or joystick. A stroke is characterized by at least the stroke initiation location, the stroke termination location, and the path connecting the stroke initiation and termination locations. Because different users may naturally write the same object, e.g., a letter, a shape, a symbol, with slight variations, the HWR system accommodates a variety of ways in which each object may be entered whilst being recognized as the correct or intended object.

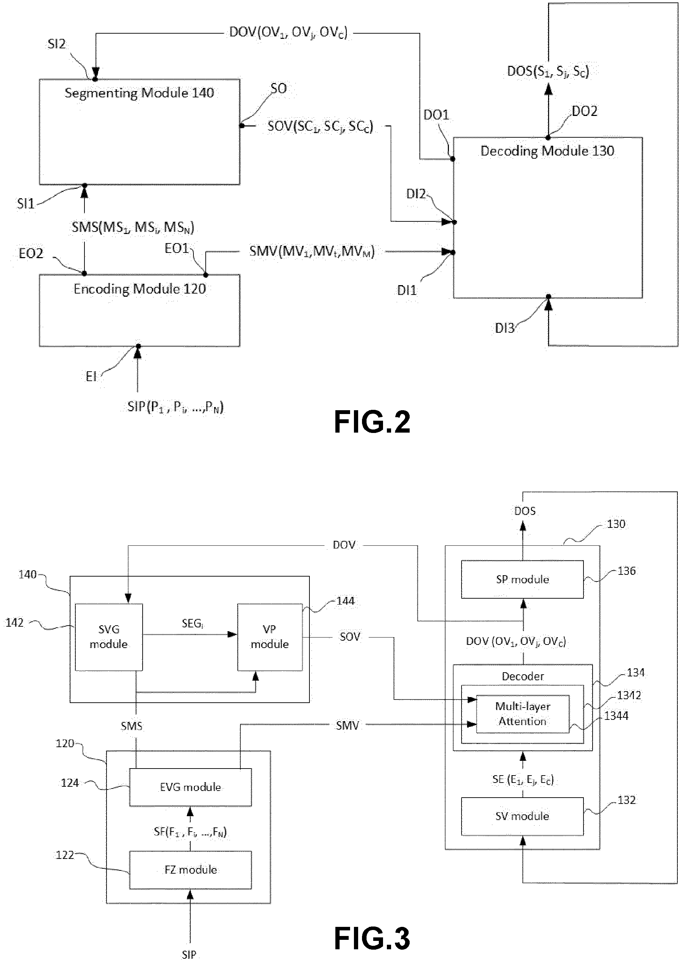

In accordance with a particular embodiment of the present invention, illustrated in Figure 1 and Figure 2, when running the applications 12 stored in the memory 7, for each step of the method of the present invention, the computing device may comprise a corresponding module configured to perform said step, namely: an Ink Point Retrieving module 110, an encoding module 120 comprising an Ink Featurizing (FZ) module 122 and an Encoding Vector Generating (EVG) module, referred to as encoder 124, a decoding module 130 comprising a Sequence Vectorizing (SV) module, referred to as a vectorizer 132, a Decoding Vector Generating (DVG) module, referred to as decoder 134, a Sequence Predicting (SP) module, referred to as predicter 136, a segmenting module 140 comprising a Segmenting Vector Generating (SVG) module, referred to as segmenter 142, and a Vector Pooling (VP) module, referred to as pooler 144.

The ink point retrieving module 110 is configured to retrieve the data representative of the user handwritten input, comprising a sequence of ink points (P₁[x₁,y₁,u₁], Pi[xi,yi,ui], P_{N}[x_{N},y_{N},u_{N}]) of variable length N in a rectangular coordinate space associated with respective time points, where xi and yi are the xy-coordinates of the pen trajectory and ui indicates a pen-up state, indicating if a current sub-stroke is the end of the user original handwritten stroke.

The handwriting input is retrieved, in any appropriate manner, either by retrieving it from an external source, by detecting it by means of the input surface 4 (possibly as a result of some processing), or by retrieving it from a local memory, for instance.

**The encoding module 120** is configured to receive the sequence of ink points SIP at an encoding input (EI) and to generate first encoding output vectors EO1V at a first encoding output (EO1), and second encoding output vectors EO2V at a second encoding output (EO2).

The encoding module comprises the ink point IF module 122, coupled to the ink point retrieving module 110, and the EVG module 124 coupled to an output of the ink featurizing IF module 122.

The ink featurizing module 122 is configured to generate, at the output of the FTZ module 122, a sequence of feature vectors SF(F1, Fi, FN) of the variable length *N* from the sequence of ink points SIP. The ink featurizing module 122 is extracting geometric features. There may be multiple different features for each ink point including, for example, coordinates [xi, yi], distances between Pi and Pi+1, distances between Pi and Pi+2, projections of the calculated distances, the pen status (pen-up or pen-down).

The EVG module 124 is configured to generate the first encoding output vectors, also referred to as a sequence of memory vectors SMV, and the second encoding output vectors, also referred to as a sequence of memory segments SMS, from the sequence of feature vectors (FVt).

The EVG module 124 is a first neural network which may be, for example, a Recurrent neural network (RNN), a Convolutional Neural Network (CNN), or a transformer encoder. RNNs are connectionist models containing self-connected hidden layers. The RNN may have a standard RNN architecture or a particular RNN architecture, such as a Long Short-Term Memory (LSTM) or a Gated Recurrent Unit (GRU) RNN architecture. The CNN may be a fully convolutional network (FCN) containing only convolution, pooling and activation layers. One benefit of the recurrent connection is that a 'memory' of previous inputs remains in the network's internal state, allowing it to make use of past context, thereby allowing higher performances of the handwriting recognition.

The first encoding output vectors comprise a sequence of memory vectors SMV (MV₁, MVt, MV_{M}) of variable length *M* wherein the memory vectors represent a high-level annotation of the handwriting input which may include a down-sampling process such as a pooling operation over points in high-level layers. If there is no pooling. the annotation length *M* may be equal to the ink point sequence length *N*. If there is a filtering operation, the ink point sequence length *N* may be equal to several multiples of the annotation length *M.* Each of the annotations represents a vector of an encoding size S1, for example S1 may be equal to 256 low level features computed at low level layers of the neural network. The number of features or the encoding size may be selected depending on the desired processing speed or the recognition accuracy characteristics of the system. That is, more features may result in better accuracy but slower processing speed and vice versa. Each of these memory vectors corresponds to an annotation of a local region of the original handwriting input. Down-sampling process is added to accelerate the encoding time by reducing the input sequence length. For example, the down-sampling process employs convolutional layers to select one output signal at a regular frequency and filter the output sequence of the memory vectors.

The second encoding output vectors comprise a sequence of memory segments SMS (MS₁, MSᵢ, MS_{N}) of the variable length *N,* wherein each memory segment corresponds to one respective ink point. The memory segments are high-level representations of the handwriting input which may comprise an up-sampling process of the memory vector encoding the sequence of ink points into a sequence of hidden vectors of a decoding size S2, for example S2 may be 128 high level features. The number of features or the decoding size may be selected depending on the desired processing speed or the recognition accuracy characteristics of the system. That is, more features may result in better accuracy but slower processing speed and vice versa. Each of these memory segments corresponds to a respective ink point of the sequence of ink points. For example, the up-sampling process employs linear layers to multiply back each memory vector into several memory segments previously down-sampled as described above. The up-sampling process allows to project back the annotation of the sequence of ink points generated by the encoding process onto each point of the input sequence for further processing by the segmenting module 140 as further explained below.

The decoding module 130 is configured to receive the first encoding output vectors, as described above, at a first decoding input DI1, segmenting output vectors SOV, as described below, at a second decoding input DI2 and, iteratively, a decoding output sequence DOS, as described below, at a third decoding input.

The decoding module 130 is configured to generate a sequence of decoding output vectors DOV at a first decoding output (DO1) and, iteratively, the decoding output sequence DOS at a second decoding output (DO2). The decoding output sequence DOS is the recognized sequence of symbols (S₁, Sⱼ, Sc) of the variable length C, wherein C is the length of the recognized sequence.

**The decoding module 130** is configured to receive the first encoding output vectors EO1V at a first decoding input (DI1), a segmenting output vector (SOV) at a second decoding input (DI2) and the decoding output sequence DOS at a third decoding input (DI3) and to generate decoding output vectors (DOV) at a first decoding output (DO1) and decoding output sequences (DOS) at a second decoding output (DO2).

**The decoding module 130** comprises a vectorizing (VTZ) module 132, a decoding vector generating (DVG) module 134 and a predicting module 136.

The vectorizing module 132 is configured to generate, at an output of the vectorizing module 132, embeddings (Eⱼ), each of a decoding size S2, from the recognized symbol of the previous iteration (Sⱼ₋₁) of the sequence of symbols DOS, wherein the symbol of the first iteration is a beginning-of-sequence symbol (<bos>). The sequence of embeddings SE (E₁, Eⱼ, Ec) is of the variable length C.

The decoding vector generating (DVG) module 134 is configured to generate decoding output vectors (OVⱼ) at an output of the DVG module 134, by applying the input embeddings (Ej), the memory vectors (MVt) and the segment context vectors (SCj) (described below) to a second neural network including multi-layer attention.

The decoding vector generating (DVG) module 134 is a transformer composed of a stack of multiple identical hidden layers (not shown) and at least one transformer decoder layer 1342.

The transformer decoder layer 1342 may have three sub-layers including a masked multi-head attention (not shown), a multi-head attention 1344 and a feed forward network (not shown).

The multi-head attention 1344 computes cross-attention between current outputs of a current embedding (Ej), processed by the preceding layers of the DVG module 134, the current memory vector (MVt), representing an annotation of the past recognized sequence of ink points, and the current segmenting output vector (SCj), representing an annotation of the past recognized symbol segments.

The decoding output vectors are high level representations of the sequence of symbols arising from the process of decoding the first and second encoding output vectors, denoted by an annotation sequence DOV of an annotation length C, wherein C is the length of the recognized sequence. Each of the annotations represents a vector of a decoding size S2, for example S2 equals 128 features.

The predicting module 136 is configured to predict, at the second decoding output DO2, a symbol Sj of the sequence of recognized symbols from the decoding output vectors (OVj) wherein the predicted symbol of the last iteration is an end-of-sequence symbol. The sequence of recognized symbols DOS (S₁, Sⱼ, Sc) is of the variable length C.

The predicting module 136 is a layer including a softmax activation function over all the symbols of the predefined alphabet.

**The segmenting module 140** is configured to receive the first encoding output vectors EO2V at a first segmenting input (SI1) and the decoding output vectors DOV at a second segmenting input (SI2) and to generate the segmenting output vectors SOV at a segmenting output (SO).

The segmenting module 140 comprises a segmenting vector generating (SVG) module 142 and a pooling module 144.

The segmenting vector generating (SVG) module 142 is configured to combine, at an output of the SVG module 142, the sequence of memory segments (MS₁, MSᵢ, MS_{N}) with a segmentation annotation sequence (A₁, Aⱼ, A_{N}) which is extracted from the decoding output vectors DOV. The DOV comprises attention probabilities denoting alignment between the predicted symbol and a local region of the input sequence of ink points.

The SVG module 142 extracts matrices of probabilities, with *N* and C being the dimensions of each matrix, wherein *N* is the length of the sequence of ink point SIP, and C is the length of the sequence of recognized symbols . By applying an argmax function to the matrix of probabilities, the SVG module calculates the segmentation annotation sequence SEG of length *N* by determining segments of the sequence of ink points corresponding to the respective predicted symbols.

The pooling module 144 is configured to group the memory segments (MS₁, MSᵢ, MS_{N}) annotated to belong to a same segment, according to updated the segmentation annotation sequence SEGi, into one merged vector to generate a sequence of segment context vectors SOV (SC₁, SCⱼ, SCc) wherein each segment context vector represents an annotation of sequence of recognized symbols of length C.

The grouping of the memory segments of a same symbol segment comprises a sum or a mean of these memory segments into a segmenting context vector.

Each of the annotations represents a vector of the encoding size S1. Therefore, the sequence of segment context vectors aligns the encoding annotation of the sequence of ink points with the segmentation of the sequence of recognized symbols DOS.

The segmenting output vectors indicated overall alignment information including which region of the handwriting input has been recognized. The overall alignment information is important when recognizing a handwriting input including mathematical expression because in principle, each part of the input should be recognized once.

Without the segmenting context vectors, misalignment may occur, implying that some parts of the input may be recognized twice or more, while some parts may never be recognized. To address this problem, the segmenting context vectors keep track of the alignment between the recognized symbols and the sequence of ink points as input to the decoding process.

The encoding module 120 and the decoding module 140 are jointly trained with databases of handwritten input stored as known sequences of symbols, wherein each symbol can be mapped onto the corresponding segment of ink points.

The encoding module 120 and the decoding module 140 are jointly trained to predict the sequence of handwritten symbols.

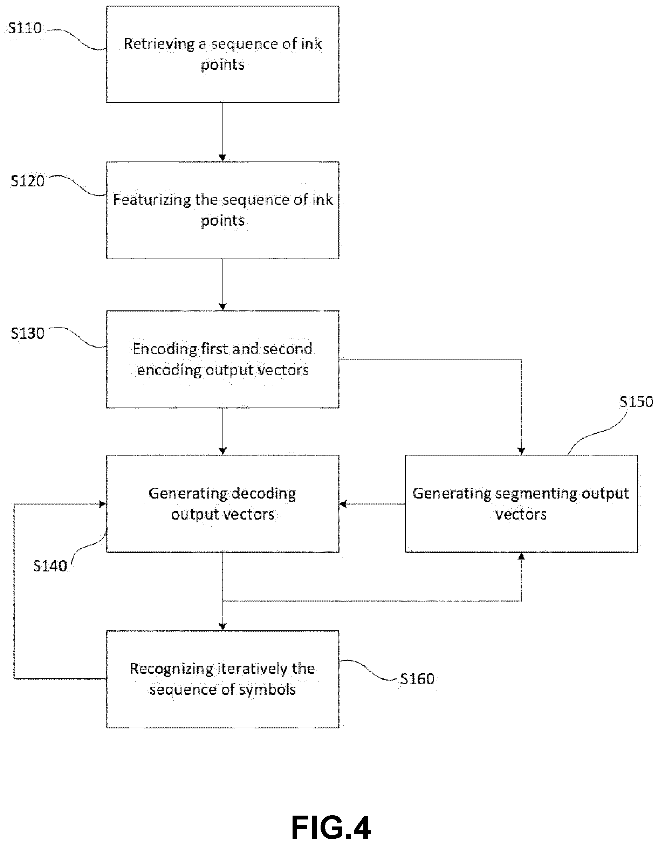

In accordance with a particular embodiment of the present invention, a method for recognizing handwriting input of a sequence of ink points into a sequence of symbols, implemented by the computing device DV, is now described with reference to Figure 4. More specifically, the computing device implements this method by executing the application 12 stored in the memory 7.

In a retrieving step S110, the computing device is retrieving a sequence of ink points in a rectangular coordinate space associated with a respective pen-up state, representing a handwriting input trajectory. The handwriting input includes data that represents a user input applied onto a touch-based user interface of the input surface 4. The sequence may be a character, a word, a line, multiple lines of text or mathematical expressions. A pre-processing step may be configured to normalize the handwriting input. The normalization renders the handwriting input invariable and independent of the initial writing style and of the input device. For example, the applied pre-processing may be as described in the paragraphs at column 11, lines 14-22 of U.S. Patent 9,875,254, which paragraphs are incorporated herein by reference in their entirety. Alternatively or additionally, the applied pre-processing may be as described in Section II.A of "Graves et al., 'A Novel Connectionist System for Unconstrained Handwriting Recognition', IEEE Transactions on Pattern Analysis and Machine Intelligence, 2009" (hereinafter Graves).

In a featurizing step S120, the computing device is generating a sequence of feature vectors. Each feature vector comprises ink features of a respective ink point of the sequence of ink points.

The set of ink features may describe, for example, geometric features between the (current) ink point (the X and Y coordinates of the ink points) and any other ink point, which may be represented by: the projections "dx_s" and "dy_s" on the X and Y axes respectively of the distance between the current ink point and the following ink point in the input ; the absolute distance "ds" between the current ink point and the previous ink point in the segment; the projections "dx" and "dy" on the X and Y axes respectively of the distance "ds"; a measure of the curvature at the current ink point by the values cos θ, sin θ, and θ, where θ is the angle formed between the line connecting the previous ink point to the current ink point and the line connecting the current ink point to the next ink point.

In an encoding step S130, the sequence of feature vectors is sent to an encoder to generate first encoding output vectors and second encoding output vectors.

The encoder is a first neural network which may be an RNN, a CNN.

The first encoding output vectors are high-level representations of the handwriting input consisting of a process of encoding the handwriting input into a sequence of hidden states, denoted by an annotation sequence EO1V of an annotation length M. The process of encoding may include a downsampling process which may be a pooling operation over points in high-level layers. If there is no pooling the annotation length M is the ink point sequence length N. If there is a pooling operation, the ink point sequence length M is several multiple of the annotation length N. Each of the annotation represents a vector of the encoding size, referred to as memory vectors (MV₁, ..., MV_{M}). Each of these memory vectors corresponds to an annotation of a local region of the original handwriting input.

The second encoding output vectors are high-level representations of the handwriting input consisting of a sequence of hidden states EO2V which encodes the sequence of ink points into a sequence of hidden vectors of an encoding size, for example the encoding size may be 256 features, referred to as memory segments (MS₁, MS₂, ..., MS_{N}). Each of these memory segments corresponds to a respective ink point of the sequence of ink points. The number of features or the encoding size may be selected depending on the desired processing speed or the recognition accuracy characteristics of the system. That is, more features may result in better accuracy but slower processing speed and vice versa.

In a decoding step S140, the computing device is generating decoding output vectors by applying first decoding inputs, second decoding inputs and third decoding inputs to a decoder.

The decoder is a transformer composed of a stack of multiple identical hidden layers and a transformer decoder layer.

The transformer decoder layer may have three sub-layers including a masked multi-head attention, a multi-head attention and a feed forward network.

The multi-head attention computes cross-attention between current outputs of a current first decoding input processed by the preceding layers and a current second encoder input, wherein the current second encoder input is a memory vector representing, as described above, an annotation of the past recognized handwriting sequence, and a third decoding input, wherein the current third decoding input is a segmenting output vector representing, as described below, an annotation of the past recognized symbol segments.

The multi-head attention computes the decoding output vectors comprising attention scores representing probabilities that ink points of the handwriting input correspond to the symbols of the pre-defined alphabet. The probabilities include a probability that an ink point is a theoretical end of the sequence. The decoding output vectors include the probabilities of each possible symbol at each ink point.

In a segmenting step S150, the computing device is generating segmenting context vector by combining the second encoding output vector and the first decoding output vector.

The decoding output vectors comprise probabilities of each possible symbol at each ink point including the information of symbol segment over the sequence of ink points.

The second encoding output vector is a memory segment at each ink point representing, as described above, a high-level representation of the sequence of ink points at each ink point of the sequence. By combining the segmentation information, from the decoder output, with the memory segments, the computing device is generating segment vectors incorporating segmentation information to the memory segments. Additionally, every memory segment belonging to a same symbol segment is pooled into one segmenting context vector. The grouping of the memory segments of a same symbol segment comprises a sum or a mean of these memory segments into a segmenting context vector.

The segmenting output vectors are applied as third decoding inputs to the decoder as mentioned above.

The segmenting output vectors indicate overall alignment information including which region of the handwriting input has been recognized. The overall alignment information is important when recognizing a handwriting input including mathematical expressions because in principle, each part of the input should be recognized once.

Without the segmenting context vectors, misalignment may occur, implying that some parts of the input may be recognized twice or more, while some parts may never be recognized, and which may be causing part of the hallucination problems. Misalignment may happen more frequently when identical consecutive symbols occur in the input sequence. Therefore, to address this problem, the segmenting context vector keeps track of the alignment between the recognized symbols and the sequence of ink points as input to the decoding process.

In a recognizing step S160, the computing device is generating iteratively the symbols of the sequence of symbols by extracting a predicted symbol from the decoding output.

The decoding output vectors comprise, as described above, the probabilities of each possible symbol at each ink point, wherein each symbol vector is of a fixed size equal to the number of total symbols in the pre-defined alphabet. Therefore, the computing device generates a corresponding symbol sequence of the handwriting input. The output sequence is encoded as a sequence of symbol vectors (DOS = S1, Sj, ..., Sc).

The recognized symbols, generated by the last layer of the decoder, are iteratively sent as first decoding inputs to the decoder.

In one embodiment, the computing device is additionally vectorizing the recognized symbols iteratively sent to the decoder into fixed size embeddings which are applied to the decoder as the first decoding inputs. The fixed size of an embedding is the decoding size (for example the decoding size is 128).

The encoder and the decoder are jointly trained with databases of handwritten input stored as known sequences of symbols, wherein each symbol can be mapped onto the corresponding segment of ink points.

Each decoding output vectors OVⱼ comprise the probabilities of each possible symbol of a pre-defined alphabet. The trained decoder is trained to predict a sequence of symbols.

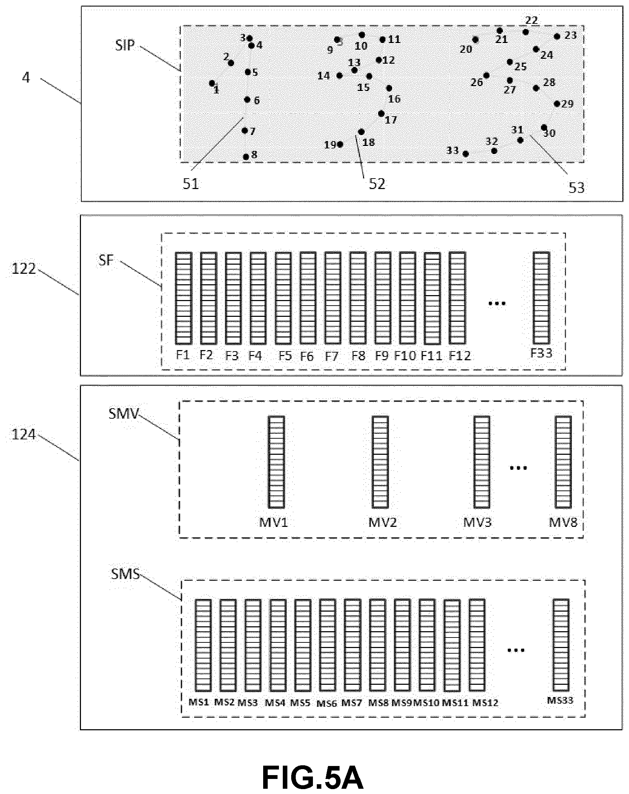

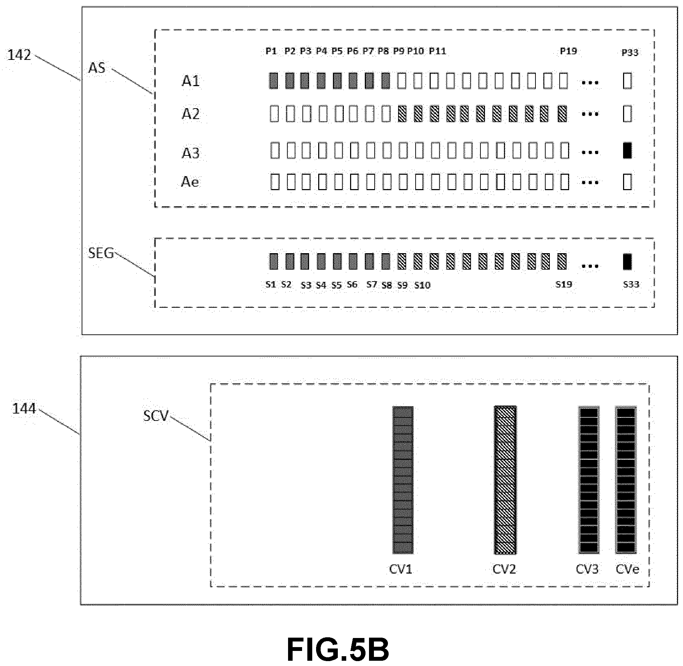

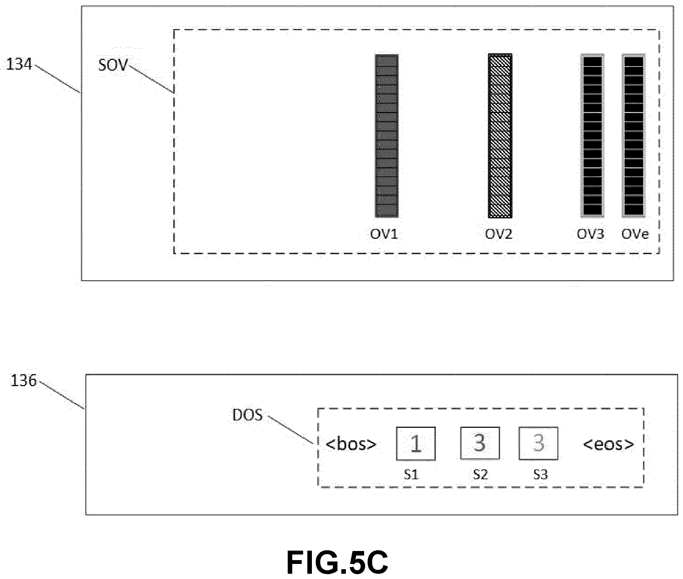

For the purpose of illustration, Figure 5 shows an example of the recognition of a handwriting input according to a particular embodiment of the present system and method.

On Figure 5A, the handwriting input is shown as three input strokes (51 - 53) of digital ink received on an input surface 4 representing three math symbols ("1 3 3") composing the number "one hundred thirty three".

The handwriting input is captured as a sequence of ink points SIP numbered from 1 to 33 onto the handwritten digital ink. The number of ink points may be sampled according to a temporal frequency, the subsequent segmentation of the plurality of ink points based on temporal information (i.e., into equal duration segments) corresponds to splitting the strokes into a plurality of segments (or ink segments) having an equal number of ink points over an equal time span (with same durations but potentially with different lengths). The ink points 1- 33 shown on Figure 5A are positioned arbitrarily along the digital ink for illustration purposes only.

The sequence of ink point SIP (P1 - P33) of length N=33, corresponds to a sequence of coordinates in a rectangular coordinate space associated with respective pen-up state Pi[xi,yi,ui]. For example, P8, P19 and P33 comprise a pen-up state equals to 1, corresponding to an end of the user original handwritten stroke.

The ink featurizing module 122 processes the sequence of ink points (P1-P33) to generate a sequence of feature vectors SF (F1-F33) of the length of the ink point sequence SIP. The sequence of feature vectors SF is illustrated on Figure 5A as vectors of 18 features including, for example, the coordinates [xi,yi,ui] of each ink point Pi and calculated features such as the distances between Pi and Pi+1, distances between Pi and Pi+2, projections of the distances on X and Y axes of the coordinate spaces.

The Encoding Vector Generating (EVG) module 124 processes the sequence of feature vectors SF (F1-F33) to generate a sequence of memory vectors SMV (MV1 - MV8) of length M=8.

The sequence of memory vectors SMV is illustrated in Figure 5A as vectors MVi of an encoding size, for example the encoding size is 256 features. Each memory vector MVi represents an annotation of high-level features of the ink point sequence SIP generated by a convolutional neural network and a transformer encoder, the convolutional neural networks is used to perform a down-sampling process to the sequence of feature vectors SF. Down-sampling process is added to accelerate the encoding time by reducing the input sequence length. For example, the down-sampling process comprises applying the input to one convolutional layer comprising a filtering size of 3 and selecting one output of the convolutional layer over four to generate a down-sampled output vector divided by 4. One skilled in the art may appreciate that other down-sampling processes, e.g. at stroke level, may be performed to accelerate the encoding time.

The high-level features of the sequence of memory vectors (SMV) is sent, as a first input, to a recurrent neural network equipped with an attention guide, which generates an output sequence of symbols DOS (Figure 5A).

The Encoding Vector Generating (EVG) module 124 is further processing the sequence of memory vectors (MV1-MV8) to generate a sequence of memory segments SMS (MS1 -MS33) of length N=33. The sequence of memory segments SMS is illustrated in Figure 5A as vectors MSi of the encoding size (for example 256 features). Each memory segment MSi represents high level features of the ink point sequence SIP up-sampled to project the memory vectors onto a sequence of length N equals to the ink point sequence length *N.*

The high-level features of the sequence of memory segments (SMS) are sent, as a first input to a segmenter, which combines the sequence of high level features SMS with a segmentation annotation sequence SEG (S1-S33) extracted from the decoding output vectors DOV (Figure 5B).

The Segmenting Vector Generating (SVG) module 142 computes annotation sequences AS (A1, A2, A3, Ae), as illustrated in Figure 5B. The Segmenting Vector Generating (SVG) module extracts from the computed decoding output vectors (OV1, OV2, OV3) generated iteratively by the Decoding Vector Generating (DVG) module, attention scores denoting alignment between the predicted symbol (S1, S2, S3) and the ink point (P1-P33) of the sequence of ink points SIP. At each point Pi of the sequence of ink points, first, second and third annotation sequences AS (A1, A2, A3) represent the occurrences of the respective first, second and third predicted symbols at the ith points of the sequence. A last annotation sequence (Ae) represents the occurrence of the predicted end of sequence symbol along the sequence, but as a non-printed symbol, the end-of-sequence annotation is null over the whole sequence of ink points P1 - P33. For example, on Figure 5B, the first annotation sequence A1 shows the significant probabilities (noted by dark grey rectangles) of each ink points P1 to P8 to be associated with one symbol of the predefined alphabet (symbol "1" for A1). The second annotation sequence A2 shows the significant probabilities (noted by dashed rectangles) of each ink point P9 to P19 to be associated with one symbol of the predefined alphabet (symbol "3" for A2). The third annotation sequence A3 illustrated the significant probabilities (suggested by continued dots from P20 (not shown) until P33 noted by black rectangle) of each ink point P20 to P33 to be associated with one symbol of the predefined alphabet (symbol "3 for A3).

By applying an argmax function to annotation sequences AS (A1, A2, A3), the SVG module calculates the segmentation annotation sequence SEG over the length of the sequence of ink points by determining segments of the sequence of ink points corresponding to the respective segment boundaries of the predicted symbols.

The SVG module 142 groups the segment vectors belonging to a same segment into one context vector to generate a sequence of context vectors SCV (CV1 - CV3) according to the segmentation annotation sequence SEG The segment vectors of the first segment (SV1 to SV8) corresponding to the first symbol S1 are grouped into the first context vector CV1. The segments vectors of the second and third segments respectively (SV9 to SV19) and (SV20 to SV33) are grouped into respective second and third context vectors CV2 and CV3. The last predicted symbol, being the end of sequence symbol, is not printed in the sequence of ink points therefore the predicted symbol is associated with last computed context vector, here the third context vector CV3. Therefore, the segmenting context vectors introduces high level features of the segments of the recognized symbols and the sequence of ink points as input to the decoding process, keeping track of the input segments contribution to the recognized sequence of symbols.

On Figure 5C, a sequence of output vectors SOV (OV1 - OV3) is generated by applying a sequence of context vectors SCV (CV1 - CV3) to the Decoding Vector Generating (DVG) module 134 that specifies spatial alignment to the decoding process and from a previous symbol (Sj-1) of the sequence of symbols DOS, applied as a first input to the DVG module.

The DVG module is a sequential neural network equipped with an attention guide, therefore for each output vector (OVj), the DVG module scans the entire ink point sequence information from the sequence of memory vectors SMV and the spatial alignment information from the sequence of context vectors SCV, both SMV and SCV sent to a multi-head attention layer of the DVG module.

The Sequence Predicting (SP) module 136 predicts iteratively a following symbol (Sj) of the sequence of symbols DOS from the sequence of output vectors (OVj).

As illustrated on Figure 5C, the initial symbol of the first iteration of the DVG module is an initial state represented as the beginning of sequence state (<bos>). The last iteration of the sequence of predicted symbols DO corresponds to the prediction of a final state represented as the end of the sequence state (<eos>). The sequence of predicted symbols DOS (S1, S2, S3) is of the length C=3, corresponding to the recognized sequence of symbol ("1 3 3") of the input strokes 51, 52 and 53.

Although the present invention has been described above with reference to certain specific embodiments, it will be understood that the invention is not limited by the particularities of the specific embodiments. Numerous variations, modifications and developments may be made in the above-described embodiments within the scope of the appended claims.

## Claims

1. A computing device configured to recognize handwriting input of a sequence of ink points into a sequence of symbols comprising:
a. An encoding module configured to receive the sequence of ink points at an encoding input (EI) and to generate first encoding output vectors at a first encoding output (EO1), and second encoding output vectors at a second encoding output (EO2);
b. A decoding module, coupled, at a first decoding input (DI1) with the first encoding output of the encoding module, configured to iteratively generate a sequence of first decoding output vectors at a first decoding output (DO1) and a second decoding output sequence at a second decoding output (DO2);
c. A segmenting module, coupled, at a first segmenting input (SI1) with the first encoding output of the encoding module and, at a second segmenting input (SI2) with the second decoding output of the decoding module, configured to generate segmenting output vectors at a segmenting output (SO);
wherein the decoding module is coupled at a second decoding input (DI2), with the segmenting output of the segmenting module, to receive the segmenting output vectors;
wherein the first encoding output vectors comprise a sequence of memory vectors (MVt) and the second encoding output vectors comprise a sequence of memory segments (MSi), each memory segment corresponding to one ink point; and
wherein the second decoding output sequence comprises the recognized sequence of symbols and the decoding module is receiving, at a third decoding input (DI3) of the decoding module, the recognized symbol of the sequence of recognized symbol of the previous iteration.

2. The computing device of claim 1 further comprising an ink point retrieving module coupled to the encoding input and configured to retrieve the sequence of ink points.

3. The computing device of any one of claims 1 to 2, wherein the encoding module further comprises:
a. an ink point featurizer comprising the encoding input and configured to generate, at an output of the featurizer, a sequence of feature vectors (Fi) from the sequence of ink points;
b. an encoder, having an encoder input coupled to the output of the featurizer, configured to generate the first encoding output vectors and the second encoding output vectors from the sequence of feature vectors.

4. The computing device of claim 3, wherein the encoder is a first neural network including a convolutional neural network, a transformer or a recurrent neural network.

5. The computing device of any one of claims 1 to 3, wherein the decoding module further comprises:
a. a vectorizer, comprising the third decoding input and configured to generate, at an output of the vectorizer, input embeddings (Ej-1) from the recognized symbol of the sequence of recognized symbols of the previous iteration, wherein the recognized symbol of the first iteration is a beginning-of-sequence symbol;
b. a decoder, having a decoder input coupled to the output of the vectorizer, and configured to generate, at an output of the decoder, the first decoding output vectors (OVj) from the input embeddings (E j-1);
c. a predicter, having a predicter input coupled to the output of the decoder, and configured to recognized, at the second decoding module output, a symbol of the sequence of recognized symbol from the first decoding output vectors (OVj) wherein the recognized symbol of the last iteration is an end-of-sequence symbol.

6. The computing device of claim 5, wherein the decoder is a recurrent neural network or a transformer comprising multi-head attention layers.

7. The computing device of any one of claims 5 to 6, wherein the decoder has a first attention input coupled to the vectorizer output, a second attention input coupled to the first encoding output of the encoding module and a third attention input coupled to the segmenting output of the segmenting module, configured to generate the decoding output vectors.

8. The computing device of any one of claims 5 to 7, wherein the encoder and the decoder are coupled and trained to predict the sequence of symbols according to possible symbols of a pre-defined alphabet.

9. The computing device of any one of claims 1 to 8, wherein the segmenting module further comprises:
a. a segmenter, having a first segmenter input coupled to the second encoding output of the encoding module, and a second segmenter input, coupled to the first decoding output of the decoding module, and configured to combine the first decoding output vectors with the second encoding output vectors to extract at a segmenter output a matrix of probabilities of each possible symbol at each ink point, wherein the matrix of probabilities determines symbol segments of the sequence of ink points; and
b. a pooler, having a first pooler input coupled to the segmenter output of the segmenter and a second pooler input coupled to the second encoding output of the encoding module, configured to group the second encoding output vectors corresponding to the same symbol segment into pooler output vectors at the segmenter output wherein the grouping comprises a sum or a mean of the grouped second encoding output vectors.

10. A method for recognizing handwriting input of a sequence of ink points into a sequence of symbols, said method comprising:
a. retrieving the handwriting input including the sequence of ink points;
b. featurizing the sequence of ink points into a sequence of feature vectors;
c. generating first encoding output vectors and second encoding output vectors by applying the sequence of feature vectors to an encoder;
wherein the first encoding output vectors comprise a sequence of memory vectors (MVn) and the second encoding output vectors comprise a sequence of memory segments (MSt);
d. generating decoding output vectors by applying first decoding inputs, second decoding inputs and third decoding inputs to a decoder, wherein the second decoding inputs are the first encoding output vectors;
e. generating segmenting context vectors by combining the second encoding output vectors and the first decoding output vectors;
f. recognizing, iteratively, the symbols of the sequence of symbols by extracting a predicted symbol from the first decoding output vectors;
wherein the third decoding inputs of the decoder are the segmenting context vectors;
wherein the first decoding inputs of the decoder are the recognized symbols of the sequence of recognized symbols of the previous iterations; and
wherein the recognized symbol of the first iteration is a beginning-of-sequence symbol.

11. The method of claim 10, wherein a memory vector and a memory segment correspond to vectors of an encoding size of features of high-level annotations of the sequence of ink points;
whereas a first length of the sequence of memory vectors is lower than the length of the sequence of ink points and a second length of the sequence of memory segments is equal to the length of the sequence of ink points.

12. The method of any one of claims 10 to 11, wherein the third decoding input is obtained by vectorizing the recognized symbol of the sequence of recognized symbols of the previous iteration into the input embeddings (Ej-1), wherein the recognized symbol of the first iteration is a beginning-of-sequence symbol.

13. The method of any one of claims 10 to 12, wherein the second decoding output sequence is a sequence of sets of probabilities of possible symbols.

14. The method of any one of claims 10 to 13, wherein the second decoding output sequence is applied to a symbol predicter to recognize a symbol of the sequence of symbols wherein the recognized symbol of the last iteration is an end-of-sequence symbol.

15. The method of claim 10 wherein the generating of the segmenting output vectors comprises:
combining the decoding output vectors with the second encoding output vectors to extract at a segmenter output a matrix of probabilities of each possible symbol at each ink point, wherein the matrix of probabilities determines symbol segments of the sequence of ink points; and
grouping the second encoding output vectors corresponding to the same symbol segment into the segmenting output vectors, wherein the grouping comprises a sum or a mean of the grouped second encoding output vectors.
